# EUROPÄISCHE PATENTANMELDUNG

(11) **EP 2 927 515 A1**
(43) Veröffentlichungstag der Anmeldung: **07.10.2015**
(21) Anmeldenummer: 14162733.1
(22) Anmeldetag: 31.03.2014
(51) Int. Cl.: F16B 39/02, F01D 5/06

(54) **Mutter und zugehörige Gasturbine**

(71) Anmelder: Siemens Aktiengesellschaft, 80333 München (DE)
(72) Erfinder: Dungs, Sascha, 46485 Wesel (DE); Hoell, Harald, 63607 Wächtersbach (DE); Kolk, Karsten, 45479 Mülheim a.d. Ruhr (DE); Lange, Marc, 50737 Köln (DE); Schröder, Peter, 45307 Essen (DE); Springborn, Dirk, 12203 Berlin (DE); Veitsman, Vyacheslav, 45879 Gelsenkirchen (DE)

(57) **Zusammenfassung**

Eine Mutter (10) mit einer einfach herstellbaren und effektiven Verdrehsicherung wird angegeben. Die Mutter (10) umfasst einen mit einer zentralen Gewindebohrung (15) versehenen Mutterkörper (11), wobei in den Umfang des Mutterkörpers (11) ein Schlitz (31) eingebracht ist, der die zentrale Gewindebohrung (15) anschneidet. Der Schlitz (31) gliedert den Mutterkörper (11) in axialer Richtung in einen Hauptteil (32) und einen Sicherungsteil (33) mit gegenüber dem Hauptteil (32) geringer axialer Ausdehnung (S2). Ein durch den Schlitz (31) freigeschnittener Klemmabschnitt (40) des Sicherungsteils (33) ist zur Verdrehsicherung der Mutter (10) gegenüber dem Hauptteil (32) verformbar.

## Beschreibung

Die Erfindung bezieht sich auf eine (Schrauben-)Mutter, insbesondere zur Montage auf einem Zuganker oder einer Welle einer Gasturbine.

Ein Läufer (Rotor) einer Gasturbine besteht üblicherweise aus einem mehrstufigen Verdichterteil sowie aus einem mehrstufigen Turbinenteil, wobei Verdichterteil und Turbinenteil auf einer gemeinsamen Welle gelagert sind. In einer herkömmlichen Bauform umfassen sowohl Verdichterteil als auch Turbinenteil jeweils ein Paket von Läuferscheiben. Beide Scheibenpakete sind über eine Hohlwelle miteinander verbunden und über einen gemeinsamen zentralen Zuganker verspannt.

Zur Montage eines derartigen Läufers wird zunächst das Scheibenpaket des Verdichterteils inklusive der Hohlwelle montiert und mit einer Spannvorrichtung gegenüber dem Zuganker verspannt. Anschließend wird eine Mutter auf den Zuganker aufgeschraubt. Die Mutter ist dabei als Stützscheibe ausgebildet, die die Hohlwelle radial gegen den Zuganker abstützt. Zur Montage wird die Mutter derart auf den Zuganker aufgeschraubt, dass diese an einem innenseitigen Axialanschlag der mittleren Hohlwelle anliegt und die Vorspannung hält. Nachfolgend werden die Turbinenscheiben montiert, worauf letztlich der gesamte Läufer mit Hilfe einer Spannmutter verspannt wird, die am turbinenseitigen Ende auf den Zuganker aufgeschraubt wird.

Im Zuge der Montage des Turbinenteils löst sich jedoch durch Dehnung des Zugankers die Mutter von dem Axialanschlag, so dass sich die Mutter (bzw. Stützscheibe) im Betrieb des Läufers gegenüber dem Zuganker verdrehen kann.

Der Erfindung liegt die Aufgabe zugrunde, eine Mutter, insbesondere zur Montage auf einem Zuganker oder einer Welle einer Gasturbine, anzugeben, die eine einfach herstellbare und effektive Verdrehsicherung umfasst.

Diese Aufgabe wird erfindungsgemäß gelöst durch die Merkmale des Anspruchs 1. Vorteilhafte und teils für sich erfinderische Ausführungsformen und Weiterentwicklungen der Erfindung sind in den Unteransprüchen und der nachfolgenden Beschreibung dargelegt.

Die erfindungsgemäße (Schrauben-)Mutter umfasst einen mit einer zentralen Gewindebohrung versehenen Mutterkörper. In den Umfang des Mutterkörpers ist hierbei ein Schlitz eingebracht, der die zentrale Gewindebohrung anschneidet. Erfindungsgemäß ist der Mutterkörper durch den Schlitz in axialer Richtung in einen Hauptteil und einen Sicherungsteil mit gegenüber dem Hauptteil geringer axialer Ausdehnung gegliedert. Ein durch den Schlitz freigeschnittener Klemmabschnitt des Sicherungsteils ist dabei zur Verdrehsicherung der Mutter gegenüber dem Hauptteil verformbar.

Erfindungsgemäß ist vorgesehen, dass die Mutter in einem Vormontagezustand ein durchgehend leichtläufiges Gewinde aufweist, so dass die Mutter auf ein zugeordnetes Außengewinde aufgeschraubt werden kann. Nach dem Verschrauben der Mutter wird der Klemmabschnitt derart verformt, dass die Mutter durch den Klemmabschnitt kraftschlüssig auf dem Außengewinde festgelegt ist.

Im Folgenden ist eine Position oder Lage des Klemmabschnitts, in dem das Gewinde durchgehend gängig ist, kurz als "Freigabeposition" bezeichnet. Im Gegensatz dazu ist eine Position oder Lage, in der der Klemmabschnitt im bestimmungsgemäßen Montagezustand der Mutter eine Klemmkraft auf das zugeordnete Außengewinde ausübt, als "Klemmposition" bezeichnet.

Je nach Dimensionierung und Material des Mutterkörpers erfolgt dabei im Rahmen der Erfindung die Verformung des Klemmabschnitts zum Wechsel zwischen Freigabeposition und Klemmposition rein elastisch, rein plastisch oder teil-elastisch.

Vorteilhafterweise ist durch die erfindungsgemäße Gestaltung der Mutter eine besonders einfache und kostengünstige Möglichkeit gegeben, eine Verdrehsicherung für eine Mutter zu realisieren.

Im Rahmen der Erfindung ist es denkbar, dass der Klemmabschnitt plastisch in eine Klemmposition verformt wird.

Vorzugsweise ist im Rahmen der Erfindung jedoch vorgesehen, dass im Zuge der Montage der Mutter der Wechsel zwischen Freigabeposition und Klemmposition unter elastischer Verformung des Klemmabschnitts erfolgt. Der Wechsel zwischen Freigabeposition und Klemmposition ist dann reversibel durchführbar, so dass die Mutter zur Demontage einfach und zerstörungsfrei lösbar und somit vorteilhafterweise wieder verwendbar ist.

Dabei ist es einerseits möglich, dass sich der Klemmabschnitt im Vormontagezustand kraftfrei in der Freigabeposition befindet. In diesem Fall wird der Klemmabschnitt im Montagezustand durch Ausübung einer Spannkraft auf den Klemmabschnitt verformt, so dass der Klemmabschnitt in die Klemmposition gebracht wird. Die Spannkraft muss zur Verdrehsicherung der Mutter aufrechterhalten bleiben. Andererseits ist es auch möglich, dass der Klemmabschnitt im Vormontagezustand durch Krafteinwirkung in die Freigabeposition verspannt ist. In diesem Fall wird die Spannkraft im Montagezustand entfernt, so dass sich der Klemmabschnitt durch seine Elastizität selbsttätig in die Klemmposition bewegt.

Insbesondere kann der Klemmabschnitt vor dem Aufschrauben der Mutter zunächst plastisch in eine Klemmposition verformt, anschließend elastisch in eine Freigabeposition verspannt werden. Nach der Montage der Mutter wird der Klemmabschnitt in diesem Fall entlastet, so dass er wieder in seine Klemmposition springt.

In einer bevorzugten Ausführungsform weisen der Klemmabschnitt und der davon durch den Schlitz getrennte Bereich des Hauptteils fluchtende Schraubenbohrungen zur Aufnahme einer Spannschraube auf, durch die der Klemmabschnitt gegen den Hauptteil anziehbar ist. Die Schraubenbohrung des Hauptteils ist dabei vorzugsweise mit einem Innengewinde versehen, während die korrespondierende Schraubenbohrung des Klemmabschnitts vorzugsweise glattwandig ausgeführt ist. Die Spannschraube wird insbesondere dann eingesetzt, wenn der Klemmabschnitt elastisch oder teil-elastisch aus der Freigabeposition in die Klemmposition verformbar ist.

Dabei ist in einer ersten Variante vorgesehen, dass die Spannmutter zur Aufrechterhaltung der Verdrehsicherung in der Mutter verbleibt. In einer zweiten Variante befindet sich der Klemmabschnitt kraftfrei in der Klemmposition und wird durch Anziehen der Spannmutter in seine Freigabeposition verspannt. In diesem Fall ist vorgesehen, die Spannmutter während der Montage der Mutter einzusetzen, und zur Realisierung der Klemmwirkung nach der Montage zu entfernen.

In einer weiteren Ausführungsform umfasst der Klemmabschnitt eine mit einem Innengewinde versehene Schraubenbohrung zur Aufnahme einer Abdrückschraube, durch die unter Widerlagerung der Abdrückschraube an dem Hauptteil der Klemmabschnitt von dem Hauptteil abspreizbar ist. Die Abdrückschraube wird vorzugsweise bei einem Klemmabschnitt eingesetzt, der plastisch zu dem Hauptteil hin in eine Klemmposition verformt ist. Die Abdrückschraube dient in diesem Fall dazu, den Klemmabschnitt während der Montage und Demontage der Mutter in seine Freigabeposition zurückzudrücken.

In einer zweckmäßigen Ausführungsform ist der Schlitz senkrecht zu einer Achse der zentralen Gewindebohrung ausgerichtet. Mit anderen Worten erstreckt sich der Schlitz bezüglich der Gewindebohrung bzw. des Mutterkörpers vorzugsweise in einer Radialebene.

Bevorzugt ist die zentrale Gewindebohrung durch den Schlitz zu mindestens einem Drittel, vorzugsweise mindestens zur Hälfte und insbesondere etwa zu zwei Dritteln ihrer Querschnittsfläche angeschnitten.

In bevorzugter Dimensionierung weist der Schlitz eine axiale Stärke (eine Schlitzbreite) auf, die etwa 5% des Durchmessers der zentralen Gewindebohrung bemisst. Der Schlitz kann alternativ aber auch deutlich breiter dimensioniert sein.

Der Sicherungsteil weist vorzugsweise eine axiale Stärke auf, die etwa 15% des Durchmessers des Innengewindes und/oder insbesondere 15% der axialen Stärke des Hauptteils bemisst. Der Durchmesser des Sicherungsteils ist vorzugsweise gegenüber dem Durchmesser des Hauptteils reduziert.

In einer bevorzugten Ausgestaltung ist die Mutter als Stützscheibe für eine Gasturbine ausgebildet, wobei der Mutterkörper eine Nabe der Stützscheibe bildet. Die Stützscheibe dient dabei, wie eingangs erläutert, insbesondere zur Montage eines Verdichterteils eines Läufers für die Gasturbine. Zudem ist die Stützscheibe zur radialen Verstrebung zwischen einer Hohlwelle und einem zentralen Zuganker, auf dem die Stützscheibe aufgeschraubt ist, ausgebildet.

Nachfolgend wird ein Ausführungsbeispiel der Erfindung anhand einer Zeichnung näher erläutert. Darin zeigen:
- FIG 1: in einer schematischen Längsschnittdarstellung einen Ausschnitt eines Läufers einer Gasturbine, wobei der Läufer eine auf einem Zuganker verschraubte Stützscheibe umfasst, die durch eine Nabe und einen davon radial abragenden Scheibenkörper gebildet ist,
- FIG 2: in einer perspektivischen Einzeldarstellung die Nabe der Stützscheibe gemäß FIG 1 in einer ersten Ausführungsform, in der sich ein zur Verdrehsicherung der Stützscheibe dienender Klemmabschnitt der Nabe in entspannter "gerader" Lage in einer Freigabeposition befindet,
- FIG 3: in Darstellung gemäß FIG 2 die Nabe in einer zweiten Ausführungsform, in der der Klemmabschnitt durch eine Axialkraft in eine "schräge" Freigabeposition verkippt wird,
- FIG 4: in Darstellung gemäß FIG 2 die Nabe in einer dritten Ausführungsform, in der der Klemmabschnitt durch eine Abdrückschraube in eine wiederum "gerade" Freigabeposition verspannt wird, und
- FIG 5: in Darstellung gemäß FIG 2 die Nabe gemäß FIG 4 in ihrem Montagezustand auf dem Zuganker.

Einander entsprechende Teile und Größen sind in allen Figuren stets mit den gleichen Bezugszeichen versehen.

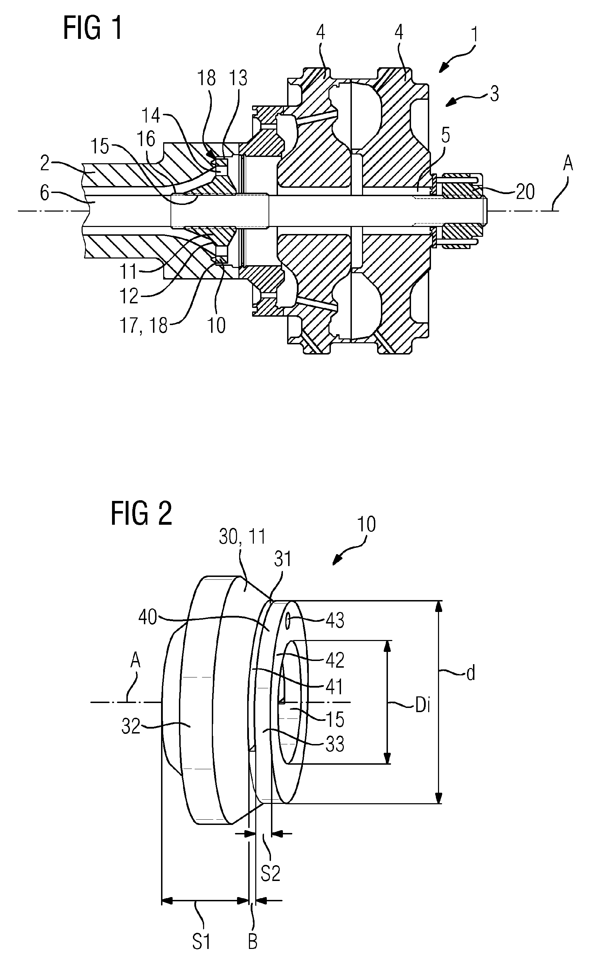

FIG 1 zeigt einen Ausschnitt eines Läufers 1 für eine Gasturbine. Der Läufer 1 umfasst einen (nicht explizit dargestellten) Verdichterteil, eine Hohlwelle 2 (in der Darstellung links) sowie einen Turbinenteil 3 (in der Darstellung rechts). Im Montagezustand des Läufers 1 ist zwischen Verdichterteil und Turbinenteil 3 eine Brennkammer angeordnet.

Der Turbinenteil 3 umfasst mehrere Turbinenscheiben 4, mit jeweils einer zentralen Bohrung 5, wobei durch die Bohrungen 5 ein zentraler Zuganker 6 durchgeführt ist. Der Zuganker 6 ist ebenfalls durch die Hohlwelle 2 koaxial durchgeführt. Verdichterscheiben (nicht dargestellt), Hohlwelle 2 und Turbinenscheiben 4 sind mit Hilfe des Zugankers 6 in Axialrichtung zu einer Einheit miteinander verspannt. Um die Hohlwelle 2 im Betrieb des Läufers 1 gegen Schwingungen zu schützen, ist eine als Stützscheibe 10 ausgebildete Mutter vorgesehen. Die Stützscheibe 10 umfasst eine auf dem Zuganker 6 sitzende Nabe 11, von der ein Scheibenkörper 12 radial abragt. Mit einer Umfangsfläche 13 des Scheibenkörpers 12 liegt die Stützscheibe 10 an einer Innenwand der Hohlwelle 10 an, und bildet somit eine starre Verbindung zwischen Hohlwelle 2 und Zuganker 6. In den Scheibenkörper 12 sind axial durchgehende Ausnehmungen 14 zur Kühlluftführung eingebracht.

Bei der Montage des Läufers 1 wird die Stützscheibe 10 als Spannmutter eingesetzt. Im Zuge der Läufermontage wird zunächst der Verdichterteil vormontiert und mit Hilfe einer Spannvorrichtung in Axialrichtung vorgespannt. Anschließend wird die Stützscheibe 10 mit einer Gewindebohrung 15 der Nabe 11 auf ein zugeordnetes Außengewinde 16 des Zugankers 6 aufgeschraubt, so dass die Stützscheibe 10 mit einem Außenrand 17 an einem innenseitigen Axialanschlag 18 der Hohlwelle 2 anschlägt, wodurch die axiale Vorspannung gehalten wird. Im weiteren Verlauf werden die Turbinenscheiben 4 montiert. Der gesamte Läufer 1 wird schließlich in herkömmlicher Weise mit einer Spannmutter 20 verspannt, die am turbinenseitigen Ende des Zugankers 6 aufgeschraubt wird. Durch eine hieraus resultierende Längenänderung des Zugankers 6 löst sich die Stützscheibe 10 von dem Axialanschlag 18, so dass eine für eine verdrehsichere Schraubenverbindung notwendige Axialkraft nicht mehr gegeben ist.

Um die Stützscheibe 10 dennoch im Betrieb des Läufers 1 gegen Verdrehen zu sichern, ist in die Nabe 11 eine Verdrehsicherung integriert.

Die Funktionsweise der Verdrehsicherung sowie Verfahren zur Herstellung und Montage der Verdrehsicherung bzw. der Stützscheibe 10 sind im Folgenden anhand von Einzeldarstellungen der Nabe 11 erläutert.

Die Nabe 11 bildet gemäß FIG 2 einen Mutterkörper, der entlang einer Achse A mit der zentralen Gewindebohrung 15 mit einem Durchmesser Di von typischerweise ca. 110 mm versehen ist. In die Nabe 11 ist ausgehend von ihrer Umfangsfläche 30 in etwa entlang einer Radialebene ein Schlitz 31 eingebracht, der die Gewindebohrung 15 zu etwa zwei Dritteln ihrer Querschnittsfläche durchdringt. Durch den Schlitz 31 ist die Nabe 11 in Axialrichtung in einen Hauptteil 32 und einen Sicherungsteil 33 unterteilt, wobei der Hauptteil 32 eine axiale Stärke S1 von etwa 80 mm aufweist, während der Sicherungsteil eine axiale Stärke S2 von etwa 15 mm aufweist. Der Schlitz 31 ist mit einer über seine gesamte Ausdehnung etwa einheitlichen Breite B von etwa 5 mm bemessen. Die Nabe 11 hat im Bereich des Hauptteils 32 einen Durchmesser von etwa 220 mm, der sich auf einen Durchmesser d von etwa 180 mm im Sicherungsteil 33 reduziert. Im Bereich des Hauptteils 32 schließt sich der - hier nicht dargestellte - Scheibenkörper 12 an.

Ein durch den Schlitz 31 von dem Hauptteil 32 beabstandetes Ringsegment des Sicherungsteils 33 ist als Klemmabschnitt 40 bezeichnet. In dem dargestellten Vormontagezustand befindet sich der Klemmabschnitt 40 in einer Position, in der er zumindest annähernd planparallel zu einer durch den Schlitz 31 freigelegten Fläche 41 des Hauptteils 32 ausgerichtet ist. Diese Position ist im Folgenden auch kurz als "gerade" Position bezeichnet. Der Klemmabschnitt 40 ist gegenüber dem Hauptkörper 32 verformbar, insbesondere aus der geraden Position heraus annähernd verkippbar, wodurch der in dem Klemmabschnitt 40 liegende Teil der Gewindebohrung 15 ebenfalls verkippbar ist. In eine Stirnfläche 42 des Klemmabschnitts 40 ist (in der Mitte des Klemmabschnitts 40) eine axiale Bohrung 43 eingebracht, die mit einer in die Fläche 41 des Hauptteils 32 eingebrachten Gewindebohrung fluchtet.

In der hier dargestellten ersten Ausführungsform ist das Innengewinde der Gewindebohrung 15 in der geraden Position des Klemmabschnitts 40 durchgehend gängig (der Klemmabschnitt 40 befindet sich in seiner Freigabeposition). Nach dem Aufschrauben der Stützscheibe 10 auf den Zuganker 6 wird in diesem Fall eine Spannschraube durch die Bohrung 43 in die fluchtende Gewindebohrung eingeschraubt, so dass sich die Breite des Schlitzes 31 beim Anziehen der Spannschraube verringert. Hierdurch werden Gewindeflanken am Innengewinde im Bereich des Klemmabschnitts 40 gegenüber ihrer Ausgangsposition im Vormontagezustand verrückt und üben somit auf Gewindeflanken des Außengewindes 16 des Zugankers 6 eine Klemmkraft aus, die ein Verdrehen der Stützscheibe 10 verhindert. Insbesondere erfolgt das Spannen unter elastischer Verformung des Klemmabschnitts 40. Zur Demontage der Stützscheibe 10 wird die Spannschraube entfernt, so dass die Stützscheibe 10 abgeschraubt werden kann. Optional ist die Spannschraube im Montagezustand durch eine herkömmliche Schraubensicherung gegen Lösen gesichert, beispielsweise durch Unterlegen eines Keilsicherungsscheibenpaars oder ähnlichem.

In einer nicht dargestellten Variante ist die Stützscheibe 10 im Montagezustand durch eine Abdrückschraube gesichert, die den Klemmabschnitt 40 von dem Hauptteil 32 abspreizt.

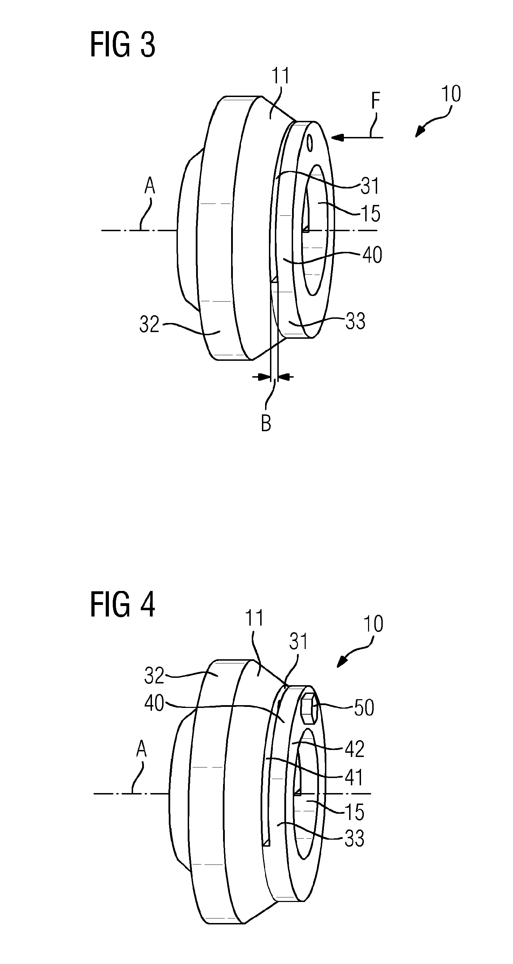

In FIG 3 ist die Nabe 11 der Stützscheibe 10 in einer zweiten Ausführungsform gezeigt. Im Unterschied zur ersten Ausführungsform ist hier allerdings das Innengewinde durchgehend gängig, wenn der Klemmabschnitt 40 (wie hier dargestellt) gegen den Hauptteil 32 gespannt ist. Zur Herstellung der Nabe 11 mit Verdrehsicherung wird dabei zunächst der Schlitz 31 mit einheitlicher Breite B in die Nabe 11 eingebracht, und der Klemmabschnitt 40 durch eine axiale Kraft F (beispielsweise mittels einer Schraubenverbindung) elastisch zu dem Hauptteil 32 hin verkippt. Erst in der dargestellten verkippten Position wird das Innengewinde der Gewindebohrung 15 eingeschnitten. Im Unterschied zur ersten Ausführungsform befindet sich hier der Klemmabschnitt 40 im verkippten Zustand in seiner Freigabeposition. In diesem Fall wird eine Spannschraube während der Montage bzw. Demontage der Stützscheibe 10 eingeschraubt. Im Montagezustand der Stützscheibe 10 auf dem Zuganker 6 ist die Spannschraube entfernt. Durch die Elastizität des Klemmabschnitts 40 strebt dieser in seine gerade Ursprungsposition (d.h. in seine Klemmposition) zurück, wodurch wiederum im Gewindebereich des Klemmabschnitts 40 eine Klemmwirkung erfolgt. Im Vorteil gegenüber der ersten Ausführungsform muss hier die Spannschraube im Betrieb des Läufers 1 nicht in der Nabe 11 der Stützscheibe 10 verbleiben.

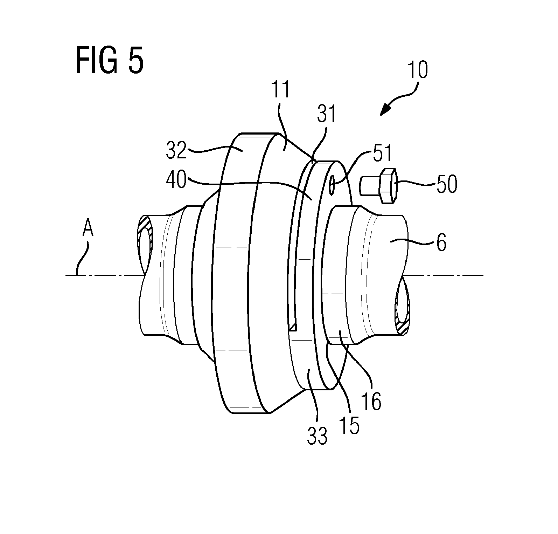

FIG 4 zeigt die Nabe 11 gemäß einer weiteren Ausführungsform, die in weiten Teilen der ersten Ausführungsform entspricht. Jedoch wird in dieser Ausführungsform nach dem Einbringen von Schlitz 31 und Gewindebohrung 15 inklusive Innengewinde (gemäß FIG 1) der Klemmabschnitt 40 plastisch in eine Klemmposition gegen den Hauptteil 32 verkippt (etwa in die Position gemäß FIG 3). Um den Klemmabschnitt 40 in seine Freigabeposition zu überführen, ist in dem hier dargestellten Vormontagezustand eine Abdrückschraube 50 eingesetzt. Diese liegt in einer Gewindebohrung 51 (FIG 5) im Klemmabschnitt 40 ein, und stützt sich gegen die Fläche 41 des Hauptkörpers 32 ab. Durch Anziehen der Abdrückschraube 50, wird der Klemmabschnitt 40 elastisch in seine gerade Freigabeposition (gemäß der Darstellung in FIG 4) von dem Hauptkörper 32 abgedrückt. Im Montagezustand der Stützscheibe gemäß FIG 5 ist die Abdrückschraube 51 entfernt, so dass der Klemmabschnitt 40 - wiederum durch seine Elastizität - danach strebt, in die verkippte Position zu gelangen und die Klemmwirkung gegeben ist. Zur Demontage der Stützscheibe 10 wird die Abdrückschraube 51 wiederum eingesetzt.

In einer nicht dargestellten Variante kann der Klemmabschnitt 40 ausgehend von dem Zustand gemäß FIG 1 bei der Herstellung auch plastisch von dem Hauptteil 32 abgespreizt werden und zur Montage bzw. Demontage der Stützscheibe 10 mit Hilfe einer Spannschraube elastisch in seine gerade Freigabeposition verformt werden.

Der Gegenstand der Erfindung ist nicht auf die vorstehend beschrieben Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

## Patentansprüche

1. Mutter (10), insbesondere zur Montage auf einem Zuganker (6) oder einer Welle einer Gasturbine, mit einem mit einer zentralen Gewindebohrung (15) versehenen Mutterkörper (11), wobei in den Umfang des Mutterkörpers (11) ein Schlitz (31) eingebracht ist, der die zentrale Gewindebohrung (15) anschneidet,
wobei der Mutterkörper (11) durch den Schlitz (31) in axialer Richtung in einen Hauptteil (32) und einen Sicherungsteil (33) mit gegenüber dem Hauptteil (32) geringer axialer Ausdehnung (S2) gegliedert ist, so dass ein durch den Schlitz (31) freigeschnittener Klemmabschnitt (40) des Sicherungsteils (33) zur Verdrehsicherung der Mutter (10) gegenüber dem Hauptteil (32) verformbar ist.

2. Mutter (10) nach Anspruch 1,
wobei der Klemmabschnitt (40) und der davon durch den Schlitz (31) getrennte Bereich des Hauptteils (32) fluchtende Schraubenbohrungen (43) zur Aufnahme einer Spannschraube aufweisen, durch die der Klemmabschnitt (40) gegen den Hauptteil (32) anziehbar ist.

3. Mutter (10) nach Anspruch 1 oder 2,
wobei der Klemmabschnitt (40) eine mit einem versehene Schraubenbohrung (51) zur Aufnahme einer Abdrückschraube (50) aufweist, durch die unter Widerlagerung der Abdrückschraube (51) an dem Hauptteil (32) der Klemmabschnitt (40) von dem Hauptteil (32) abspreizbar ist.

4. Mutter (10) nach einem der Ansprüche 1 bis 3,
wobei der Schlitz (31) senkrecht zu einer Achse (A) der zentralen Gewindebohrung (15) ausgerichtet ist.

5. Mutter (10) nach einem der Ansprüche 1 bis 4,
wobei die zentrale Gewindebohrung (15) durch den Schlitz (31) zu mindestens einem Drittel, vorzugsweise mindestens zur Hälfte und insbesondere etwa zu zwei Dritteln ihrer Querschnittsfläche angeschnitten ist.

6. Mutter (10) nach einem der Ansprüche 1 bis 5,
wobei der Schlitz (31) eine axiale Stärke (B) aufweist, die etwa 5% des Durchmessers (Di) der zentralen Gewindebohrung (15) bemisst.

7. Mutter (10) nach einem der Ansprüche 1 bis 6,
wobei der Sicherungsteil (33) eine axiale Stärke (S2) aufweist, die etwa 15% des Durchmessers (Di) der zentralen Gewindebohrung (15) bemisst.

8. Mutter (10) nach einem der Ansprüche 1 bis 7,
wobei der Sicherungsteil (33) eine axiale Stärke (S2) aufweist, die etwa 15% der axialen Stärke (S1) des Hauptteils bemisst.

9. Mutter (10) nach einem der Ansprüche 1 bis 8,
wobei der Sicherungsteil (33) einen im Vergleich zu dem Hauptteil (32) reduzierten Durchmesser (d) aufweist.

10. Mutter (10) nach einem der Ansprüche 1 bis 9,
die als Stützscheibe für eine Gasturbine ausgebildet ist, wobei der Mutterkörper (11) eine Nabe der Stützscheibe bildet.

11. Gasturbine mit einer Mutter (10) gemäß einem der Ansprüche 1 bis 10.
